# EUROPEAN PATENT APPLICATION

(11) **EP 2 270 383 A2**
(43) Date of publication of application: **05.01.2011**
(21) Application number: 10003427.1
(22) Date of filing: 30.03.2010
(51) Int. Cl.: F16M 11/16, F16M 11/04

(54) **Base for a flat screen assembly**

(30) Priority: 30.06.2009 CN 200920162038 U
(71) Applicant: Shenzhen TCL New Technology Ltd., Nanshan District Shenzhen Guangdong 518067 (CN)
(72) Inventor: Bertho, Dominique, 49320 Vauchretien (FR)
(74) Representative: Thomas, Stephan

(57) **Abstract**

The invention concerns a base (2) for a flat screen assembly (1). It is an aim of the invention to provide a base (2) which is simple in construction and which can be placed on a desk or be fixed to a wall or a ceiling. No or no significant changes of the flat screen assembly (1) shall be necessary when using the base. This is achieved by a base (2) comprising a first member (3) to be fixed to a rear side of the flat screen assembly (1) and a second member (4) to provide footing, the second member comprising a base plate (5) and a bar (6) fixed to the base plate (5), where the first member (3) is axially or radially fixable to the bar (6).

## Description

### BACKGROUND OF THE INVENTION

### FIELD OF THE INVENTION

The present invention is related to a base for a flat screen assembly. The base allows to dispose the flat screen assembly on e.g. a table or a board or to fix it to a wall or a ceiling. Flat screen assemblies are used for computers and TV apparatuses.

### DESCRIPTION OF THE PRIOR ART

A flat screen assembly, mentioned as a display, is described in the US 7,286,342 B2. A base of the display can be rotated by two axes to allow the display to be placed on a desk or to be fixed on a wall. For that a short axis is integrated in a rear side of the display. The structure of the base is quite complicated and does not allow fixing of the display to a ceiling. For fixing the display to a wall, the screen has to be turned by 180°; that means, that pictures displayed on the screen have to be turned respectively. This turning requires additional software, so that the base is not usable for common TV- displays.

From US 6,918,562 B2 a flat screen assembly, mentioned as a displaying apparatus, is known, where a monitor body is rotatably fixed to a base. The fixing is possible in tree different positions. The base comprises a frame with two stand parts. The flat screen assembly can be placed on a desk or be fixed to a wall or a ceiling. The flat screen assembly is very complicated, especially regarding fixing structures of the monitor body, and it needs some work for assembly and disassembly.

### SUMMARY OF THE INVENTION

It is therefore desirable to improve a base for a flat screen assembly in order to simplify the construction of the base, which can be placed on a desk or be fixed to a wall or a ceiling. No or no significant changes of the flat screen assembly shall be necessary when using the base.

According to the invention this can be achieved by a base for a flat screen assembly, where the base comprises a first member to be fixed to a rear side of the flat screen assembly and a second member to provide footing. The second member comprises a base plate and a bar fixed to the base plate. The first member is axially or radially fixable to the bar.

By that the base can be used for the alignments placing on a desk or fixing to a wall or a ceiling. The base can easily be fixed to a rear side of the flat screen assembly, e.g. by screws. It is easy and economical to manufacture the base e.g. by moulding the parts.

As an advantage of the invention, the first member can be easily fixed to the bar according to the kind of aligning the flat screen assembly.

The base can be produced and sold separately as an accessory.

Possible advantageous developments of the invention are specified in the dependent claims.

In an alternative embodiment of the invention the fixing of the two members is detachable and realized by catch springs. By that the alignment of the flat screen assembly and, if necessary a realignment, is very easy

In an other alternative embodiment of the invention the bar is hollow and a pin of the first member fits into the bar. This allows quick and safe alignment of the flat screen assembly.

In an other alternative embodiment of the invention the bar has a square profile.

In an other alternative embodiment of the invention the bar has radial opposite openings in an end region opposite the base plate, where a profile of the openings fits to the profile of the pin. By that a possibility of radial fixing of the first member to the bar is realized.

In an other alternative embodiment of the invention the first member comprises a fixing plate which allows detachable fixing of the first member to the rear side of the flat screen assembly. By that the first member has not to be an integral part of the flat screen assembly.

In an other alternative embodiment of the invention the first member allows rotation between the flat screen assembly and the pin. This makes it possible to adjust the position of the flat screen assembly.

In a preferred alternative embodiment of the invention the first member comprises a spherical cap modelled at the fixing plate and a respective nappe to which the pin is fixed.

In an other alternative embodiment of the invention a limit stop is provided on the first member. This allows precise positioning of the first member to the second member with a defined clearance.

### BRIEF DESCRIPTION OF THE DRAWINGS

The invention will be explained in more detail using two embodiments, which are illustrated in figures 1 to 5.

It shows:
Figure 1, a simplified side view of a flat screen assembly with a base according to the invention;
Figure 2, a simplified perspective view of a first member of the base according to figure 1;
Figure 3, a simplified perspective view of an alternative embodiment of the first member;
Figure 4, a radial and an axial fixing of the first member to the a second member of the base;
Figure 5, a cross section of a pin of the first member which is fixed radially to the second member as a detail; and

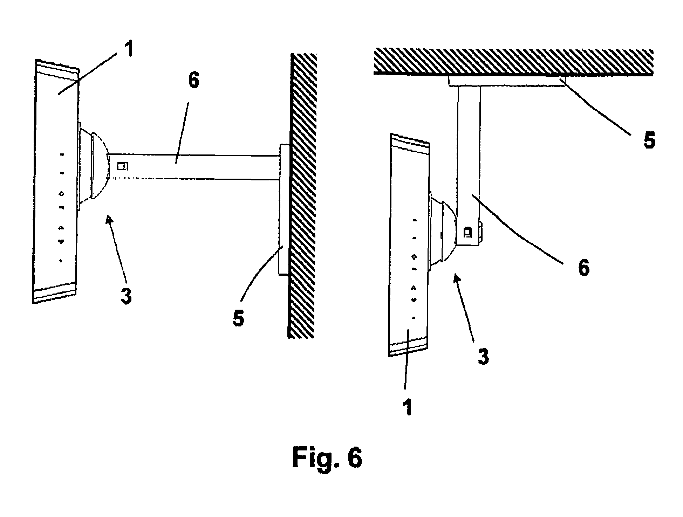

Figure 6, flat screen assemblies fixed to a wall and to a ceiling.

### DETAILED DESCRIPTION OF THE INVENTION

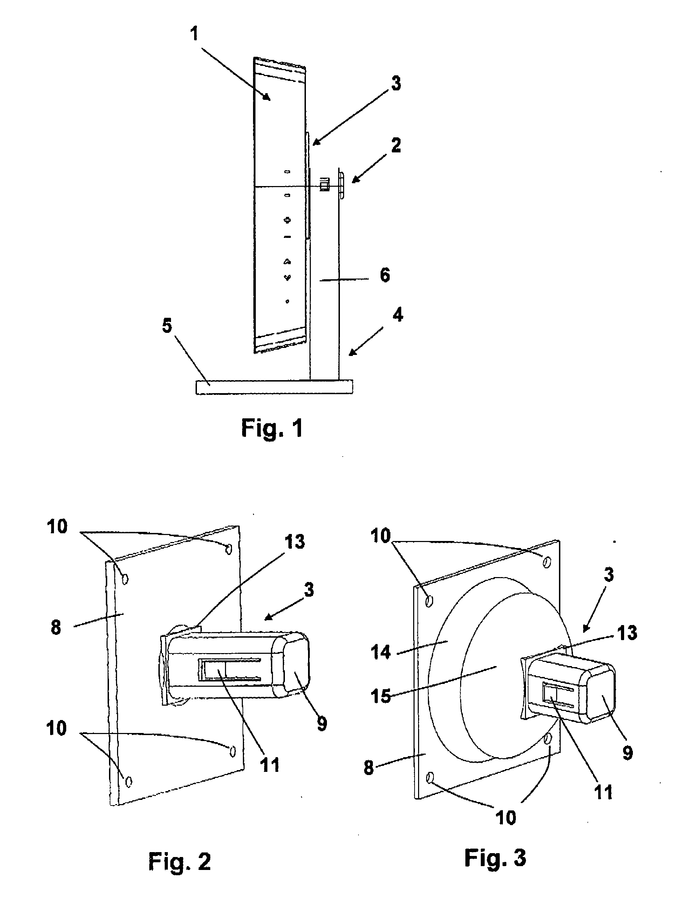

As shown in figure 1, a flat screen assembly 1 is placed on a table by a base 2. The flat screen assembly 1 of a TV or for a computer comprises a screen, e.g. a LCD or a plasma screen, and a housing. The base 2 consists of a first member 3 and a second member 4.

The second member 4 comprises a base plate 5, to which a bar 6 is rigidly fixed to extend vertically from the plate 5. The bar 6 is square in cross section and hollow, that means that the profile of bar 6 is square with a regular thickness of its walls. A side of the bar 6 opposite the base plate 5 is open.

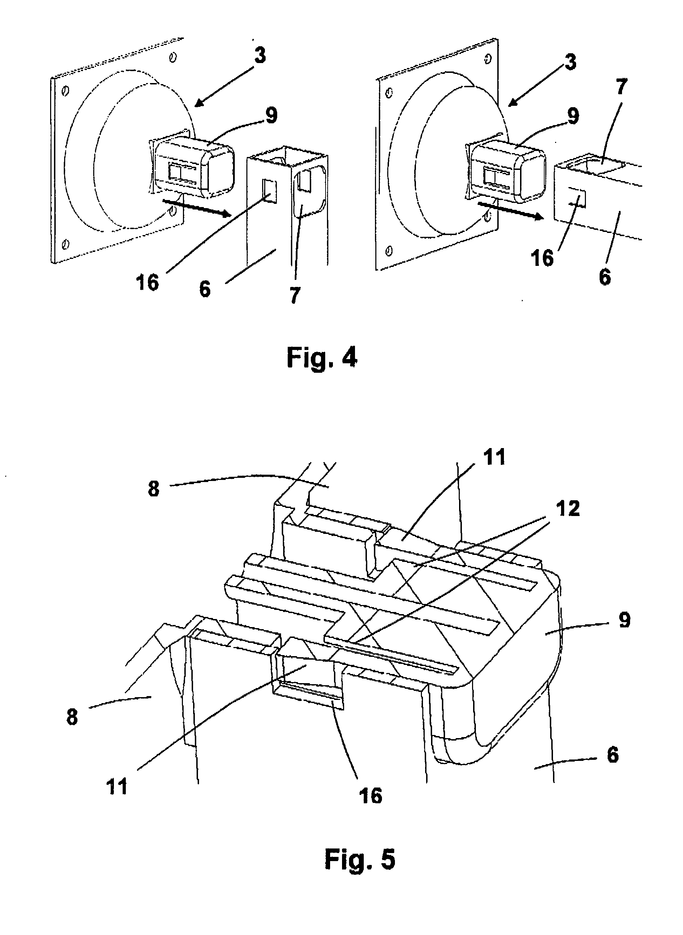

Two radial opposite openings 7 are arranged in a region of the open side of the bar 6, which is visible more clearly from figures 4 and 5. The openings 7 are in two opposite longitudinal walls of the bar 6 in a region opposite the base plate 5. A profile of the openings 7 is square and is equal to the inner profile of the bar 6, except for eventually rounded corners of the openings 7.

Longitudinal walls of the bar 6 having no opening 7 comprise rectangular catch holes 16 to cooperate with catch springs 11 described below.

A first embodiment of the first member 3 is shown in figure 2. The first member 3 consists of a square plane fixing plate 8 and a pin 9, which extends vertically from the centre of the fixing plate 8. The pin 9 is square in its cross section and rigidly fixed to the fixing plate 8. All free edges of the pin 9 are rounded or chamfered. In the near of each corner of the fixing plate 8 there is a through- hole 10, where a distance from one of the through- holes 10 to an other is according to VESA standard fixation bosses of the flat screen assembly 1. On the fixing plate 8 a limit stop 13 is formed to define a stop when introducing the pin 9 into the bar 6.

The pin 9 is partly hollow. Two opposite longitudinal sides of the pin 9 comprise one of the catch springs 11 each. The catch spring 11 is formed from a respective wall of the pin 9 by slots which extend in a rectangular U- form parallel to a longitudinal axis of that side. An open side of that U is directed to a free end of the pin 9 opposite the fixing plate 8. That means that the catch spring 11 is fixed to the pin 9 at a side directed to that free end of the pin 9, and an opposite free end of the catch spring 11 is elastically movable. The free end of the catch spring 11 is thicker than the respective wall, by that extending outwards from the surface of that wall when not pressed. An inner part of the pin 9 is formed to be a stopper 12 for the catch springs 11. A length of the catch springs 11 is dimensioned such that - when introduced into the bar 6 - they press against inner sides of the bar 6 and by that minimize a free motion between the bar 6 and the pin 9.

A preferred second embodiment of the first member 3 is shown in figure 3. It differs from the first embodiment as follows: The fixing plate 8 is not plane but comprises a central spherical cap 14 extending towards the pin 9. The cap 14 is modelled with the fixing plate 8 in one piece. The pin is fixed rigidly to a nappe 15 which corresponds to and is movably mounted onto the cap 14.

The fixing of the pin 9 to the nappe 15 and the mounting of the nappe 15 onto the cap 4 is performed e.g. by a screw and a holder which is arranged movably inside the cap. The screw is put from the inner side of the cap through respective holes of the holder, of the cap 14 and the nappe 15 and is screwed into the pin 9. That holes are dimensioned to fix relative positions between the screw, the holder, the nappe 15 and the pin 9 and to allow movement between the pin 9 and the fixing plate 8 with the cap 14.

The base 2 is made from metal or from suitable plastics or from combinations thereof that means that some parts are made from metal and other parts from plastics. The plastics must be rigid and resisting to breaking.

For bringing the flat screen assembly 1 into a desired position in a first step the fixing plate 8 of the first member 3 is fixed to the back side of the flat screen assembly 1 by screws.

In a second step for placing the flat screen assembly 1 on a desk the pin 9 is inserted radially into the bar 6 through the openings 7 until the catch springs 11 snap into the catch holes 16. The base plate 5 is directed opposite an upper side of the flat screen assembly 1. The base 2 with the flat screen assembly 1 can be positioned e.g. on a table or on a desk.

In a second step for hanging the flat screen assembly 1 at a wall the second member 4 is fixed to the wall e.g. by screws. The pin 9 is inserted longitudinally into the bar 6 through the open end of the bar 6 until the catch springs 11 snap into the catch holes 16.

In a second step for hanging the flat screen assembly 1 at a ceiling the second member 4 is fixed to the ceiling e.g. by screws. The pin 9 is inserted radially into the bar 6 through the openings 7 until the catch springs 11 snap into the catch holes 16. The base plate 5 is directed opposite a lower side of the flat screen assembly 1.

For disconnecting the first member 3 from the second member 4 the catch springs 11 are pressed and the pin 9 is pulled from the bar 6.

## Claims

1. A base for a flat screen assembly (1), the base (2) comprising a first member (3) to be fixed to a rear side of the flat screen assembly (1) and a second member (4) to provide footing, the second member comprising a base plate (5) and a bar (6) fixed to the base plate (5), where the first member (3) is axially or radially fixable to the bar (6).

2. The base according to claim 1, **characterized in that** the fixing of the two members (3, 4) is detachable and realized by catch springs (11).

3. The base according to claim 1 or 2, **characterized in that** the bar (6) is hollow and that a pin (9) of the first member (3) fits into the bar (6).

4. The base according to one of the claims 1 to 3, **characterized in that** the bar (6) has a square profile.

5. The base according to one of the claims 1 to 4, **characterized in that** in an end region opposite the base plate (5) the bar (6) has radial opposite openings (7), where a profile of the openings (7) fits to the profile of the pin ().

6. The base according to one of the claims 1 to 5, **characterized in that** the first member (3) comprises a fixing plate (8) which allows detachable fixing of the first member (3) to the rear side of the flat screen assembly (1).

7. The base according to one of the claims 1 to 6, **characterized in that** the first member (3) allows rotation between the flat screen assembly (1) and the pin (9).

8. The base according to claim 7, **characterized in that** the first member (3) comprises a spherical cap (14) modelled at the fixing plate (8) and a respective nappe (15) to which the pin (9) is fixed.

9. The base according to one of the claims 1 to 8, **characterized in that** a limit stop (13) is provided on the first member (3).
